**Europäisches Patentamt**

**European Patent Office**

**Office européen des brevets**

(11) Publication number: **0 382 356 B1**

# EUROPEAN PATENT SPECIFICATION

(45) Date of publication of patent specification: **24.05.95**

(51) Int. Cl.⁶: **B01D 71/52**, B01D 67/00, B01D 61/00, B01D 53/22, C08J 9/28, //C08L71:00

(21) Application number: **90300570.0**

(22) Date of filing: **19.01.90**

(54) **Membranes.**

(30) Priority: **26.01.89 GB 8901672**

(43) Date of publication of application:
**16.08.90 Bulletin 90/33**

(45) Publication of the grant of the patent:
**24.05.95 Bulletin 95/21**

(84) Designated Contracting States:
**AT BE CH DE ES FR GB GR IT LI LU NL SE**

(56) References cited:
**EP-A- 0 261 734
EP-A- 0 277 834
EP-A- 0 297 744
EP-A- 0 368 003
DE-A- 3 321 860**

**JOURNAL OF MACROMOL. SCIENCE - RE-VIEW OF MACROMOL. CHEM. PHYS., vol. C27, no.2, 1987, pages 313-341, Marcel Dekker, Inc.; M.J. MULLINS et al.: "Thesynthesis and properties of poly[aromatic ketones]"**

(73) Proprietor: **NORTH WEST WATER GROUP PLC
Dawson House,
Great Sankey
Warrington WA5 3LW (GB)**

(72) Inventor: **Colquhoun, Howard Matthew
8 Grove Park
Knutsford, Cheshire WA16 8OA (GB)**
Inventor: **Taylor, Thomas Mark Cavell
29 Heathfields Close
Chester CH2 2AT (GB)**

(74) Representative: **Allman, Peter John et al
MARKS & CLERK,
Suite 301,
Sunlight House,
Ouay Street
Manchester M3 3JY (GB)**

BRITISH POLYMER JOURNAL, vol. 17, no. 1, 1985, pages 4-10; X. JIN et al.: "Asulphonated poly(aryl ether ketone)"

CHEMICAL ABSTRACTS, vol. 110, no. 10, 6th March 1989, page 59, abstract no.76905j, Columbus, Ohio, US; E. DRIOLI et al.: "Poly(ether ether ketone)ultrafiltration membranes", & MO KEXUE YU JISHU 1988, 8(2), 1-5

0HEMICAL ABSTRACTS, vol. 110, no. 14, 3rd April 1989, page 20, abstract no.115619r, Columbus, Ohio, US; Y. OOKOSHI et al.: "PEEK [poly(oxy-1,4-phenyleneoxy-1,4-phenylene-carbonyl-1,4-phenylene)] gel from benzophenone solution & SEN'I GAKKAISHI 1988, 44(12), 634-6

**Description**

This invention relates to membranes, particularly asymmetric membranes suitable for use in filtration and the preparation and use thereof.

By "asymmetric membrane" we mean a membrane (a) which comprises, on the side adjacent the solution to be filtered, a skin of thickness 0.05-2.0 $\mu$m supported on a substrate of thickness 30-250 $\mu$m; (b) in which both the skin and the substrate comprise the same polymer; and (c) in which the pore sizes of the substrate is greater than the pore sizes of the skin. It is known that such membranes may be used in ultrafiltration and microfiltration and, when suitably coated with hydrophilic polymer, in reverse osmosis.

Asymmetric ultrafiltration and microfiltration membranes can be prepared by the well established phase-inversion process developed by Loeb and Sourirajan (Adv. Chem. Ser. 38, 117, 1963). In that process a selected polymer is dissolved in a solvent and subsequently precipitated by addition of a non-solvent under controlled conditions. Polymers that have been used include cellulose acetate, polyimides, polyvinylidenefluoride, polysulphones, amorphous sulphonated polyetheretherketone, and polyamides. The solvents used include acetone, dimethylsulphoxide, dimethylformamide, dimethylacetamide, N-methylpyrolidinone, concentrated sulphuric acid, and aqueous hydrochloric acid.

For such membranes, it is known that the size and density of the membrane pores is dependent on the concentration of the polymer solution and on the presence therein of pore-forming additives, e.g. salts, sugars and low MW polyethylene glycols (H Strathmann in "Material Science of Synthetic Membranes", Lloyd, ACS 269, 1984).

Membranes prepared from the aforesaid polymers tend to suffer from one or more of the following disadvantages. For example, they can be used in a limited temperature range, e.g. 0-90°C; they are unable to withstand sterilisation by super-heated steam;' they have a limited chemical stability to, for example, acids, bases and oxidising agents; they are soluble in, or swellable by, organic solvents, e.g. at room or elevated temperature.

We have now prepared asymmetric membranes which overcome many of the aforesaid disadvantages. Such membranes may have (I) a pore size which allows their use in ultrafiltration or (II) a pore size which allows their use in microfiltration. Where the asymmetric membrane is suitable for ultrafiltration it may be used as the porous substrate of composite membranes for use in gas separation, pervaporation and reverse osmosis membranes.

According to a first aspect of the present invention there is provided an asymmetric membrane comprising an at least partially crystalline aromatic ether ketone polymer other than a PEEK polymer.

By partially crystalline we mean that the level of crystallinity is at least about 10%, preferably at least 15%, more preferably at least 20% and particularly more preferably at least 30% weight fraction. Such crystallinity is measured by wide angle X-ray diffraction as described by Blundell and Osborn (Polymer 24, 953, 1983).

By "aromatic ether ketone polymer" we mean a polymer in which inter-ring ether linkages and inter-ring ketone linkages together provide at least a major portion of the linkages between aromatic units in the polymer backbone. We do not exclude the possibility that a portion of the aromatic rings may be replaced by a heterocyclic ring, e.g. pyridine.

According to a second aspect of the invention there is provided an asymmetric membrane comprising an aromatic ether ketone polymer wherein the level of crystallinity is at least 20%.

As examples of aromatic ether ketone polymers of which the membranes according to the present invention may be comprised may be mentioned inter alia polymers and copolymers illustrated in the drawings appended hereto.

In the drawings:
Figure 1 illustrates polymer chains in which the aromatic rings are joined by ether or ketone bonds (I-VI);
Figure 2 illustrates polymer chains in which a portion of the aromatic rings are joined by direct links (VII-IX)) or are bicylic rings (X), (Xa);
Figure 3 illustrates copolymer units bearing inter-cyclic -SO$_2$- bonds (XI-XII);
Figure 4 illustrates certain copolymers containing ketone and ether links (XV) or in addition, a mixture of biphenyl and sulphone linkages (XIV and XVI);
Figure 5 illustrates a typical wide angle X-ray diffraction curve for a membrane according to the present invention; and
Figure 6 illustrates a scanning electron micrograph of a cross-section through a typical membrane according to the present invention.

Each such polymer-type is hereinafter referred to for convenience by the trivial name appended thereto in the drawings.

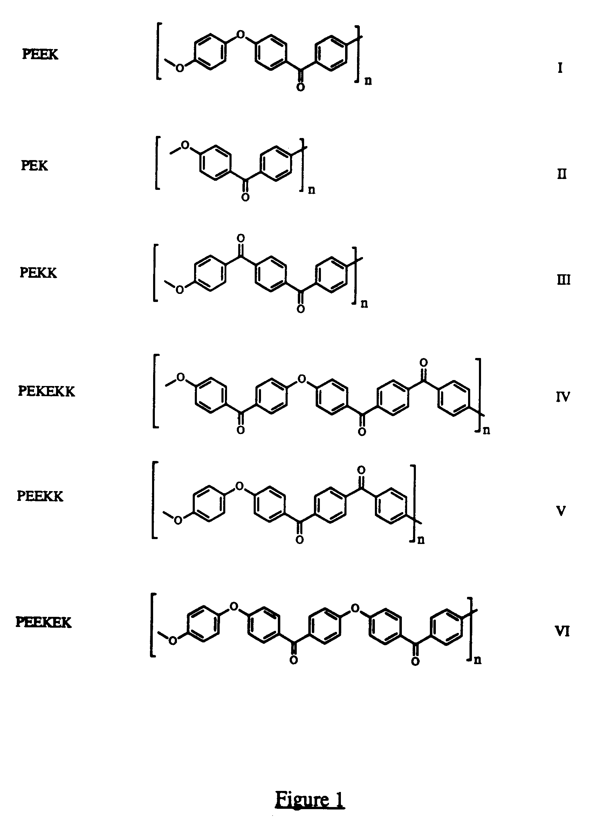

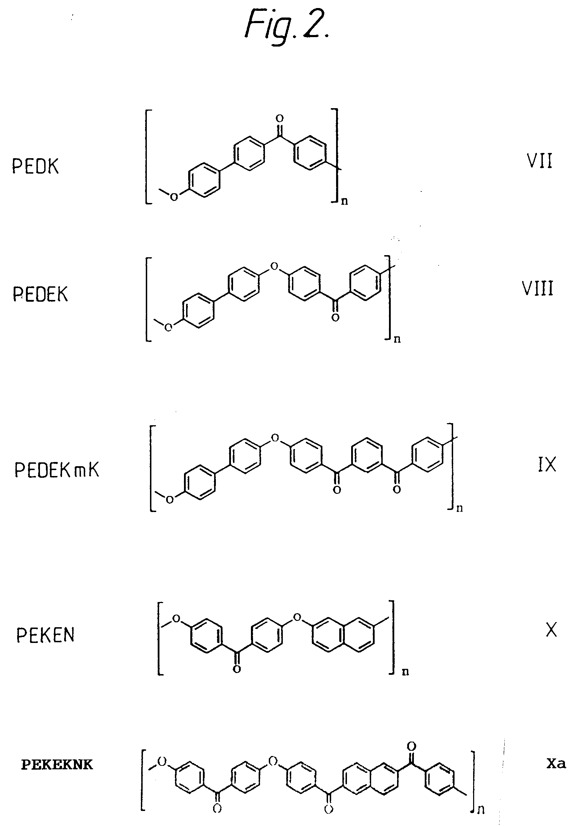

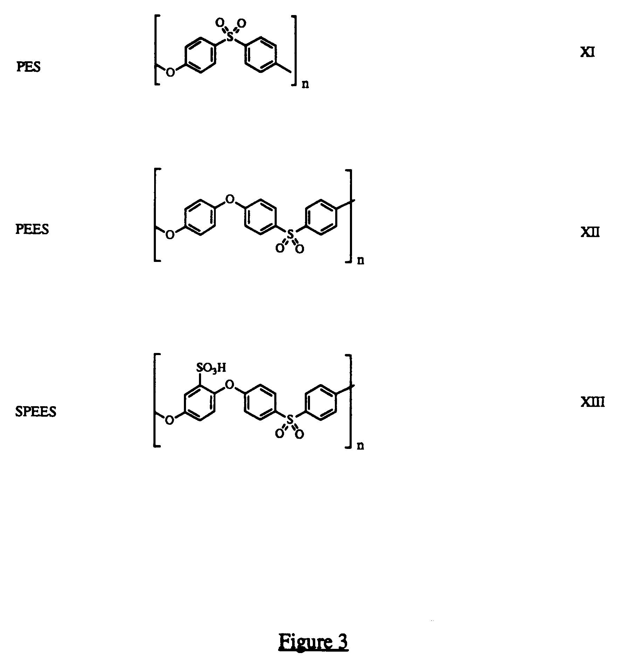

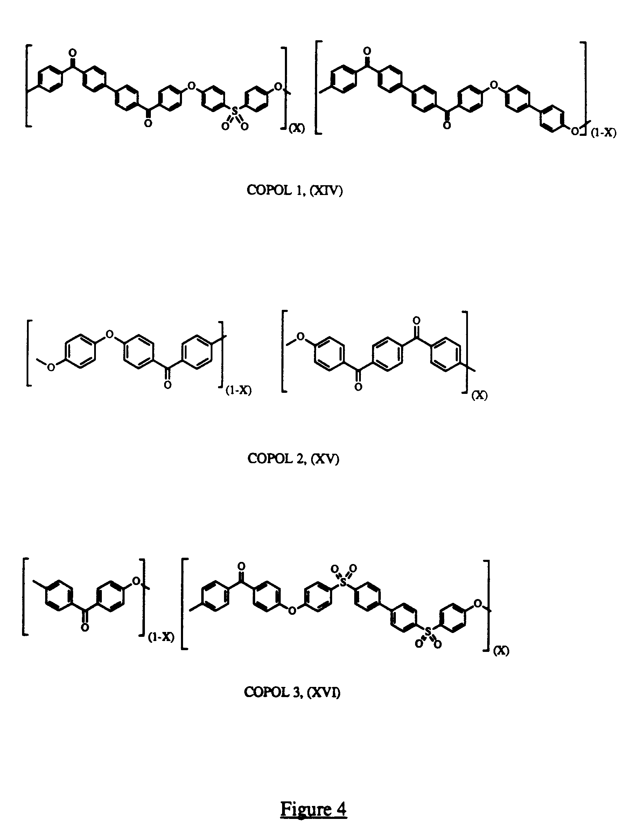

It will be appreciated that in Figures 1-4,

E  represents an ether linkage;

K  represents a ketone linkage;

D  represents a direct linkage;

m  represents a meta substituted aromatic ring;

N  represents a naphthalene ring; and

S  represents a sulphone linkage except where it is used as a prefix to the polymer trivial name where it represents "sulphonated".

We do not exclude the possibility that at least a portion of the ether linkages in the polymers illustrated in Figures 1-4 may be replaced by thioether linkages.

The preparation of polymers illustrated in certain Figures of the drawings are described in inter alia Journal Macromolecular Science, Review of Macromolecular Chem. Phys., (27 (2), 313-341, 1987 (General Formulae I-VIII); European Patent Specification No 0,323,076 (General Formula IX); Polymer 1984, vol 25 (August), 1151 (General Formula X); EPA 0,194,062 (General Formula XIV) and co-pending British Patent Application BPA 89, 10549 (General Formula XVI).

Whereas the polymer is preferably a homopolymer, e.g. PEEK or PEK, we do not exclude the possibility that it may be a copolymer e.g. PEEK/PEK, PEEK/PES, PEK/PES, PEEK/PEES, wherein the copolymer units are represented by the General Formulae XI-XII in the drawings appended hereto.

It will be appreciated that where a copolymer is used the nature and molar percentage of the "comonomer" will be chosen such that it does not unduly decrease the crystallinity of the polyetherketone component of the copolymer and that the inter-aromatic links therein are non-hydrolysable under the conditions of preparation and expected use of the membrane. As examples of comonomer units maybe mentioned inter alia aromatic sulphones, sulphides, and biaryls.

We do not exclude the possibility that the membrane may be formed from a mixture of polymers, e.g. PEEK/PEK or PEK/PES.

We have now found surprisingly that the membrane of the present invention may be prepared by precipitation in a suitable form or shape, from a solution of the polymer in a strong acid by contacting the solution with a non-solvent for the polymer. As examples of such suitable forms or shapes may be mentioned inter alia tubular, capillary or sheet.

According to a third aspect of the present invention there is provided a process for the preparation of a membrane according to the first aspect of the present invention which process comprises at least the step of shaping a solution of an aromatic ether ketone polymer in a strong acid into the desired shape and then contacting it with a non-solvent for the polymer such that the membrane of a suitable form, shape and size is precipitated.

According to a fourth aspect of the present invention there is provided a method for the preparation of a membrane according to the second aspect of the invention which method comprises at least the steps of

(A) shaping a solution of an aromatic ether ketone polymer in a strong acid into the desired shape, said acid being non-sulphonating to the polymer;

(B) contacting the shaped solution with a non-solvent for the polymer under suitable conditions such that a membrane in a suitable form, shape, size and porosity is precipitated;

(C) removing the membrane from the strong acid/non-solvent mixture; and

(D) treating the membrane to enhance its crystallinity.

In the process according to the third or fourth aspect of the invention, the strong acid is a substantially non-sulphonating reagent towards the aromatic ether ketone polymer. For example, where (in the method of the fourth aspect of the invention) the aromatic ether ketone polymer is PEEK the strong acid is typically methanesulphonic acid.

The solution is formed by dissolving the polymer, typically in particulate form, in the strong acid under an inert atmosphere, at a temperature and timespan sufficient to completely dissolve the polymer. At this stage a pore-forming agent may be, added for example an inorganic salt; a soluble amorphous organic polymer, e.g. sulphonated polyetherethersulphone (XIII); or a low molecular weight organic compound, e.g. acetophenone.

A sheet membrane is typically formed by casting the polymer solution as a thin liquid film, typically of thickness between 20 and 500 $\mu$m, onto a suitable substrate which is not attacked by the strong acid solution. The membrane can be supported by a porous fabric e.g. of polyethylene, polypropylene, PEEK, polyester, PTFE or carbon fibre. Alternatively the membrane can be unsupported in which case the film would be cast onto a plane non-porous surface, e.g. a band of stainless steel, PTFE or polypropylene or a sheet of glass.

The polymer is then precipitated by treating the shaped solution with non-solvent under suitable conditions, e.g. it may be immersed in non-solvent liquid in a gelation bath, or non-solvent vapour may be allowed or caused to diffuse into it.

A capillary membrane may be formed by extruding the polymer solution through the outer annulus of a coaxial die. Through the inner nozzle there is a flow of suitable fluid, e.g. an inert gas or liquid, which is a non-solvent for the polymer.

The precipitated membrane is then allowed to remain in contact with the non-solvent for a time sufficient to allow substantially complete gelation of the polymer, then removed from the non-solvent.

The residual strong acid/non-solvent is removed from the membrane by treatment with an aqueous medium, e.g. water or an aqueous base, at an appropriate temperature, e.g. between room temperature and the boiling point of water. Often further treatment with an organic medium, e.g. acetone, is necessary to reduce the amount of acid present in the membrane further.

In accordance with the method of the fourth aspect of the invention, the membrane may be subjected to a treatment to enhance crystallinity. As examples of such treatment may be mentioned inter alia heating dry above Tg of the polymer; treatment with a polar aprotic solvent, e.g. acetone, dimethylformamide (DMF) or dimethylacetamide (DMA). Where DMF or DMA is used in such treatments it is later removed by a suitable further treatment, e.g. by washing with acetone.

Preferably the strong acid is water-free although we do not exclude the possibility that it may contain a small amount, for example up to about 10% of water.

It will be appreciated that the strong acid will be chosen in the light of the structure of the polymer. For example, it should not react chemically with the polymer to unduly reduce the crystallinity thereof. For example, whereas 98% sulphuric acid reacts unduly with polyetheretherketone (PEEK) and should not be used therewith, it can advantageously be used with polyetherketone (PEK) in the process according to the present invention. The strong acid should be a good solvent for the polymer and, after membrane formation, should be readily extractable therefrom.

We do not exclude the possibility that the strong acid may be a mixture of acids, eg sulphuric acid and acetic acid. It will be appreciated that where one of the acids in the mixture is a non-solvent for the polymer the concentration thereof will be insufficient to inhibit solvation of the polymer in the mixture. For example, where the strong acid is a mixture of sulphuric acid and acetic acid the concentration of acetic acid is typically less than 15% w/w.

As examples of strong acids for use in the process of the present invention may be mentioned - inter alia sulphuric acid, liquid hydrogen fluoride, methane sulphonic acid, fluoromethane sulphonic acid, and di- and tri-fluoromethane sulphonic acid.

It will be appreciated that the skilled man will take appropriate precautions where he uses any of the above acids.

We do not exclude the possibility that a further solvent may be used in combination with the strong acid, with the proviso that it does not unduly impair the solvent power of the strong acid, or react with the strong acid or unduly react with the polymer in the presence of the strong acid.

As typical examples of such further solvents may be mentioned inter alia liquid sulphur dioxide, 1,2,4-trichlorobenzene, 1,2-dichloroethane, dichloromethane, dichloroacetic acid and trifluoroacetic acid.

We have found that the presence in the strong acid of a small amount, typically less than 10%, of a non-solvent, for example water or an organic liquid, e.g. acetophenone, often impairs the solvency slightly and has the advantage that the gelation time for membrane formation is reduced allowing a higher rate of membrane production and may increase the porosity of the membrane or otherwise modify its structure.

Typically the concentration of the polymer in the strong acid in the process according to the present invention is between 5 and 50% w/w.

The non-solvent used in the process of the present invention may be a single component or a mixture. As examples of such non-solvents may be mentioned inter alia acetic acid, dilute sulphuric acid, water, methanol, ethanol. Dilute aqueous media, e.g. solutions of inorganic salts or bases may be used. It will be appreciated that such solutions may enhance the porosity of the membrane.

Electron microscopy has revealed that the membranes prepared by :the process of the present invention have typical microporous structures, e.g. honeycomb (i.e. cellular and sponge-like) or extended finger-pore.

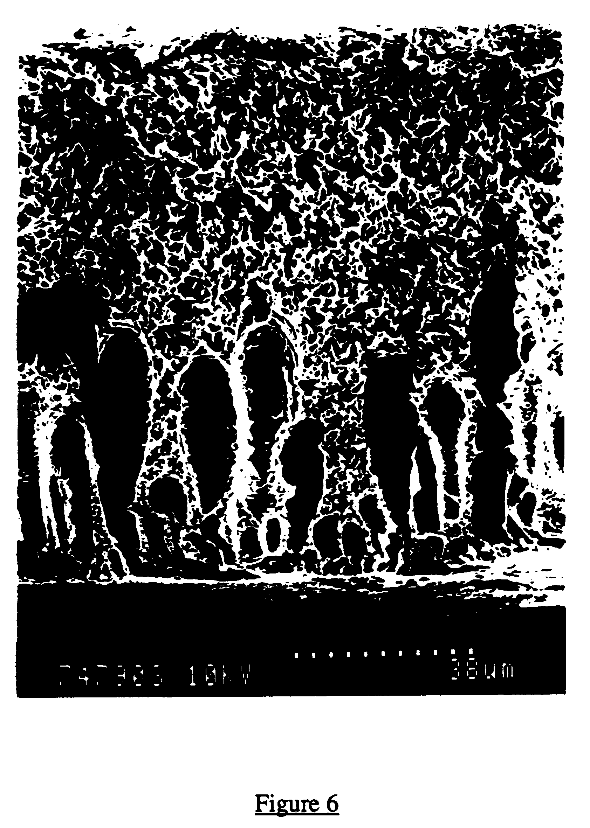

A scanning electron micrograph (1100 X magnification) of the cross section through a typical membrane according to the present invention prepared in Example 14, is shown in Figure 6 in which an asymmetric membrane with a honeycomb structure containing finger pores can be clearly seen.

It is well known that the honeycomb structure tends to be mechanically stronger than the extended finger-pore structure ("Synthetic Polymer Membranes", R E Kesting, John Wiley, 1985, pp. 282). It appears that, at least in part, the structure is determined by the interaction of the solvent/non-solvent combination with the polymer and each other.

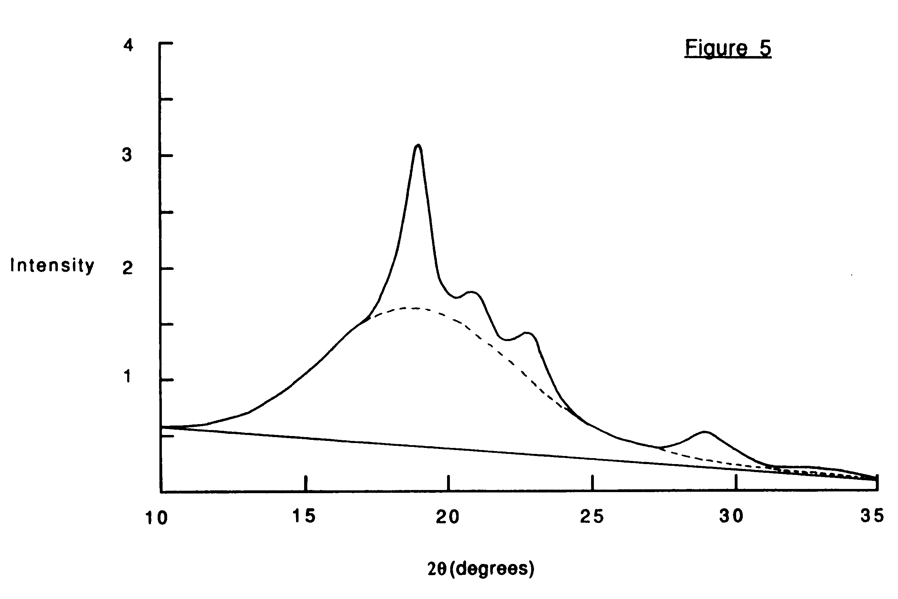

The invention is further illustrated by reference to Figure 5 of the drawings appended hereto which shows, by way of example only, a typical wide-angle X-ray diffraction curve for an aromatic ether ketone polymer of which the asymmetric membrane is comprised. Figure 5 is more fully described hereinafter in relation to Examples 51-52.

The invention is further illustrated by reference to the following Examples.

Examples 1-4

These Examples illustrate asymmetric membranes according to the present invention prepared from a polyetherketone.

Polyetherketone (ICI, Victrex (RTM) PEK, having a melt viscosity of 0.39 kNs/m$^2$ at 1000s$^{-1}$ at 400°C; 10 g) was dissolved in 98% sulphuric acid at 25°C overnight under a dry atmosphere. After 12 hours a dark red 11% w/w solution was obtained.

From this solution a liquid film (200 $\mu$m thick) was cast onto a dry glass plate.

In Examples 1 and 2, the film was immediately immersed in glacial acetic acid at 5°C to precipitate the membrane. After 1 hour the acetic acid solution was slowly exchanged for deionised water over 1 hour.

In Examples 3 and 4, the film was immediately immersed in 40% sulphuric acid to precipitate the membrane.

The white opaque membrane produced in Examples 1-4 was washed in boiling water and then in refluxing acetone to extract any residual sulphuric and/or acetic acid. Further crystallisation of the polymer was then effected (i) by heating the membrane in an oven at 200°C for 20 minutes (Examples 1 and 3) or (ii) by treatment with refluxing DMA for 30 minutes, washing in boiling acetone and drying at room temperature (Examples 2 and 4).

Examples 5-6

These Examples illustrate asymmetric membranes according to the present invention prepared from a polyetheretherketone polymer.

The procedure of Example 1 was repeated except that polyetheretherketone (ICI Victrex (RTM) PEEK 450P; melt viscosity of 0.425 kNs/m$^2$ at 1000 sec$^{-1}$ at 380°C) was used instead of polyetherketone and methanesulphonic acid or trifluoromethanesulphonic acid was used instead of 98% sulphuric acid.

Examples 7-10

These Examples illustrate the use of hydrofluoric acid as the strong acid solvent in the process according to the present invention.

In a 6 cm diameter wide-mouth polypropylene bottle, polyetheretherketone (ICI Victrex (RTM)PEEK 450P, as used in Examples 5 and 6; 20 g) was dissolved in anhydrous hydrofluoric acid (50 ml) at 5°C under a nitrogen atmosphere over 30 minutes. A further portion (5 ml) of hydrofluoric acid was then added to compensate for evaporation losses to give a solution concentration of approximately 30% weight/weight polymer. Flat sheets of 3 cm wide PTFE were coated with polymer solution by dipping the sheet into the polymer solution, allowing excess polymer to run off during 30 seconds under a saturated HF atmosphere and then placing the coated sheet immediately into a polythene beaker containing glacial acetic acid (500 ml; the gelation agent) where it remained for 30 minutes.

The precipitated membrane was immersed in 5% aqueous potassium carbonate solution at room temperature for 1 hour and then the solution was boiled for 2 hours, the membrane was washed with water and crystallised by heating in an oven at 200°C for 20 minutes.

In Examples 8-10, the procedure of Example 7 was repeated except that different non-solvents were used instead of glacial acetic acid as shown in Table 1.

TABLE 1

| EXAMPLE NO. | GELATION NON-SOLVENT |
|---|---|
| 7 | acetic acid |
| 8 | ethanol |
| 9 | water |
| 10 | 5% $K_2CO_3$ in water |

Examples 11-23

These Examples illustrate flat membranes prepared from from further polymers and/or prepared under various conditions.

A solution of the polymer in a strong acid was cast under the conditions of Example 1 into a non-solvent. The membrane was washed with water. In Examples 11 and 15 the membrane was further cystallised by treatment with boiling acetone for 2 hours. The specific conditions are shown Table 2.

7

CT's 24 and 25 are comparative tests with Berghof (DE-A-3321860)

TABLE 2

| EX. No. | POLYMER | SOLUTION STRENGTH (w/w) | SOLVENT | GELATION NON-SOLVENT | WASHING CONDITIONS (Boiling) |
|---|---|---|---|---|---|
| 11 | PEK | 10% | 98% $H_2SO_4$ | 90% AcOH | water |
| 12 | PEK | 10% | 98% $H_2SO_4$/AcOH(9/1) | 75% AcOH | water |
| 13 | PEK | 15% | 95% $H_2SO_4$ | 75% AcOH | water |
| 14 | PEK | 12% | 95% $H_2SO_4$ | 80% AcOH/10%AcONa/10%water | water |
| 15 | PEK | 12% | 95% $H_2SO_4$ | 37.5%$H_2SO_4$/37.5%AcOH/25%water | water |
| 16 | PEK | 12% | 95% $H_2SO_4$ | 50% $H_2SO_4$ | water |
| 17 | PEK | 10% | 95% $H_2SO_4$ | 8% $NaHSO_4$/water | water |
| 18 | COPOL1, X=0.4 | 10% | 98% $CF_3SO_3H$ | 75% AcOH/8% AcONa/17%water | water |
| 19 | PEEKK | 10% | 98% $CF_3SO_3H$/$MeSO_3H$(19/1) | " | water |
| 20 | PEKK | 10% | 98% $H_2SO_4$ | " | water |
| 21 | PEKEKK | 10% | 98% $H_2SO_4$ | " | water |
| 22 | COPOL2,X=0.05 | 10% | 98% $CF_3SO_3H$ | " | water |
| 23 | PEDEKmK | 10% | $CF_3SO_3H$/$MeSO_3H$(19/1) | " | water |
| CT24 | PEEK | 5% | 96% $H_2SO_4$ | water | water |
| CT25 | PEEK | 10% | 96% $H_2SO_4$ | water | water |

CT24 and CT 25 are Comparative Tests

In CT 24, a 5% solution of polyetherketone (ICI Victrex 450-P PEEK) in 96% sulphuric acid was formed by stirring at room temperature for 18 hours, and was then coated onto a polyester backing cloth, [c.f. DE-A-3321860 Example 4] using a casting knife set to give a 200μm cast film thickness. The membrane was

8

coagulated in water for an hour and then washed in water, soaked for 24 hours in water, and washed again. On attempting to crystallise a sample of the membrane by heating it in dimethylformamide, the sulphonated polyetherketone was found to soften at about 80°C and began to dissolve at about 120°C.

In CT 25, a 10% solution of polyetherketone (ICI Victrex 550-P PEEK) in 96% sulphuric acid was formed by stirring at room temperature for 24 hours, and was then coated onto a glass plate using a casting knife set to give a 200$\mu$m cast film thickness. The membrane was coagulated and washed as in Example 24, and was then dried and annealed at 200°C for 30 minutes. Examination of the membrane by wide angle X-ray diffraction revealed the material to be essentially non-crystalline.

Examples 26-29

These Examples illustrate the use of pore-forming agents in the process according to the present invention.

A solution containing 12 wt% polyetherketone (PEK) or a copolymer (Example 29) and 5 wt%, or 4% (Example 28), pore-forming agent in 98% sulphuric acid was cast on to a glass plate as in Example 1, and then allowed to stand in air for 1 minute before coagulating in a bath of coagulant maintained at 2-4°C. After 20 minutes, the precipitated membrane was washed with water and then soaked in water for 16 hours before washing with water. Residual pore-forming agent was removed by washing with acetone.

Details of the process are shown in Table 3.

TABLE 3

| Example No. | Polymer | Additive Strength (w/w) | Polymer Strength (w/w) | Gelation Non-Solvent |
|---|---|---|---|---|
| 26 | PEK | 5% AcPh | 12% | A |
| 27 | PEK | 5% AcPh | 12% | B |
| 28 | PEK | 4% SPEES | 12% | A |
| 29 | COPOL3 X = 0.125 | 5% BzPh | 10% | B |

A:75% acetic acid in water B:75% AcOH/8%NaOH/17% water AcPh = acetophenone BzPh = Benzophenone

The chemical stability of the membranes prepared in Examples 26 and 27 was tested by filtering various solutions through the membrane at 6 bar pressure. The results are shown in Table 4.

TABLE 4

| Membrane prepared in Example No | Solvent | Flux after 2 hours 1/m2h.bar | Flux after 4 hours 1/m2h.bar |
|---|---|---|---|
| 27 | acetone | 91.4 | 84.9 |
| 27 | toluene | 61.4 | 59.1 |
| 27 | n-methylpyrrolidone | 19.1 | 22.9 |
| 27 | 33% aq. hydrochloric acid | 11.94 | * |
| 27 | 30% aq. sodium hydroxide | 14.33 | 11.94 |
| 26 | 1,1,1-trichloroethane | 7.58 | 7.72 |
| 27 | 1,1,1-trichloroethane | 7.2 | 7.3 |

* failure of the PTFE lining in the Sartorius pressure cell stopped the test.

The membrane prepared in Example 27 was found to have a 90% rejection of particles greater than 1$\mu$m during the 1,1,1-trichlorethane test.

Example 30

This Example illustrates a membrane according to the present invention prepared from a blend of polyetherketones

A 10 wt% polymer solution, containing PEK (8%) and PEEK (2%) in 98% sulphuric acid was allowed to stand at room temperature for 20 days, and then cast onto a glass plate as described in Example 1 and coagulated in a gelation bath containing 75 wt% acetic acid, 17 wt% water, and 8 wt% sodium acetate, at 4°C. After 1 hour the precipitated membrane was washed with water and then soaked in water for 16 hours before washing again with water.

Examples 31-41

These Examples illustrate hollow fibre membranes according to the present invention.

General Procedure

A 15% w/w dark red solution of polyetherketone (PEK) (except Example 36 where COPOL3, X = 0.125 was used instead of PEK) in 98% sulphuric acid prepared by dissolving the polymer (60g; of melt viscosity 0.19 kNs/m$^2$ at 1000s$^{-1}$ at 400°C) in 98% sulphuric acid (340 g) at 25°C was transferred to the reservoir of a spinning unit of the general type described in Kirk-Othmer "Encyclopedia of Chemical Technology", Third Edition, Volume 12, p497 et seq, John Wiley & Sons, New York. The solution was degassed several times and was extruded under pressure, eg 15-30 psi (103-207 kPa) at 4.6 cm$^3$/min through a stainless steel tube-in-hole spinneret (hole diameter: 1.5mm; tube diameter: 0.55mm) into a bath (4-8cm) of cold water with an air gap of 7.0cm. Water was used as the internal gelating agent with a water injection rate of 16.5 cm$^3$/min The extrudate was wound onto a drum winder at 6m/min to give a fibre which after extraction by boiling in water for about 2 hours and Soxhlet extraction with acetone over about 6 hours and drying, had an outer diameter of 1.15mm and wall thickness of 0.17mm. The gas permeation rate for nitrogen was then measured using a Sartorius SM 16223 membrane cell connected to a mass flow meter and pressure gauge.

The experiment was repeated using different polymer concentrations and different internal gelation non-solvents. The specific conditions and gas permeation results are shown in Table 5. Further results on certain membranes prepared in these Examples are shown in Tables 6 and 8.

In Example 35, the external surface of the capillary was etched with a gas plasma.

From Table 5 it can be seen (i) that there is a broad inverse correlation between the membrane permeability and polymer concentration in the spinning solution e.g. compare Examples 40, 38 and 31, (ii) plasma etching of the membrane enhances permeability (compare Examples 35 and 40) and (iii) the gas permeation results reveal that the membranes have adequate permeability to be commercially useful in ultrafiltration.

10

TABLE 5

| EXAMPLE NO. | STRENGTH OF POLYMER SOLUTION (w/w) | INTERNAL GELATION NON-SOLVENT | PERMEATION RATE CONSTANT FOR $N_2$, $Px10^9$ ($kmol\ s^{-1}\ m^{-2}Pa^{-1}$) |
|---|---|---|---|
| 31 | 15 | water | 0.4 |
| 32 | 11 | water | 4.1 |
| 33 | 11 | water | 15.3 |
| 34 | 10 | 10% H2SO4 | 29.7 |
| 35 | 8 | water | 403 |
| 36 | 10 | water | 258 |
| 37 | 15 | 20% AcOH | 3.1 |
| 38 | 12 | water | 38 |
| 39 | 10 | 20% H2SO4 | 30 |
| 40 | 8 | water | 330 |

Example 41

This Example illustrates the preparation of a PEK membrane according to the present invention on a non-woven support.

A 10% solution of polyetherketone (PEK) in 95% sulphuric acid was cast onto a non-woven polyethylene cloth using a casting knife with the gap set to 200μm. The membrane was coagulated by immersion in 90% aqueous acetic acid. After 1 hour the membrane was washed with water, allowed to soak in water for 16 hours, rinsed with water and then soaked in water for a further 6 hours before allowing it to dry in air.

Example 42

This Example illustrates the capability of a membrane of the present invention to withstand steam sterilisation.

A sample of the membrane prepared in Example 27 gave pure water flux of 23.6 litres/m$^2$/hr at 6 bar. After steam-sterilisation at 121°C for 2 hours in an autoclave, the pure water flux of a sample was 19.1 litres/m$^2$/hr, increasing to 22.3 litres/m$^2$/hr after a 7 hour flux test.

Example 43

This Example illustrates a thin-film composite reverse osmosis membrane wherein a PEK ultra-filtration membrane according to the present invention provides the support membrane.

A sample of the membrane prepared in Example 27 was soaked in 10% aqueous butane-1,4-diol at 60°C for 10 minutes and then oven dried at 70°C for 10 minutes. The membrane was then coated with a 5% solution of cellulose acetate (Eastman 4655, 39% acetyl) in chloroform using a brush-technique, and then oven dried at 70°C for 5 minutes. The resulting membrane gave a salt rejection of 73.5% and a flux of 5.3 litres/m$^2$/day when tested in reverse osmosis (crossflow at 0.8 litres/min, 40 bar pressure) using a solution containing 2000ppm of sodium chloride.

Example 44

This Example illustrates a thin film composite membrane for gas separation wherein a PEK UF membrane according to the present invention provides the support membrane.

A sample of the membrane prepared in Example 27 was brush coated with liquid silicone rubber (Dow corning 3140 RTV), and the silicone cured for 16 hours at room temperature. The membrane was tested in a gas permeability cell. With air as the test gas, the permeation rate constants for oxygen and nitrogen (kMol/m$^2$•s•Pa) were found to be 3.35 x 10$^{-14}$ and 2.09 x 10$^{-14}$ respectively, giving a separation factor for the two gases of 1.69.

Example 45

This Example illustrates the preparation of a thin-fim composite pervaporation membrane wherein a PEK ultra-filtration membrane according to the present invention provides the support membrane.

A sample of the membrane prepared in Example 27 was soaked in 10% aqueous butane-1,4-diol at 60°C for 10 minutes and then oven dried at 70°C for 10 minutes. The membrane was then brush-coated with a 10% solution of fluorosilicone rubber (Dow Corning Silastic 730) in acetone, and dried at 70°C for 5 minutes. Pervaporation through this membrane of a 40/60 (v/v) mixture of ethanol and water (2 bar feed pressure; 2 x 10$^{-2}$ bar permeate pressure) gave a separation factor (ethanol/water) of 5.7, at a flux of 1.14 kg/m$^2$•day.

Examples 46-66

These Examples illustrate the separating limits of certain membranes prepared in the above Examples.

A sample of each membrane was separately mounted in a Sartorius SM16223 cell. It was washed with 18% acetone in water (5 ml), deionised 18MΩ water (50 ml), and 0.85% saline (5 ml) solution before being subjected to the following tests.

The flux and rejection of the membranes against the following substrates were determined:-

BSA: 0.1% solution of Bovine serum albumin (molecular weight 67,000) in 0.85% saline;

Cytochrome C: molecular weight 12,327;

γ-Globulin: molecular weight 150,000;

Vitamin B12: molecular weight 1,355.

In Example 47, a further sample of the membrane prepared in Example 5 was mounted in a Sartorius SM16223 cell. It was washed with 18% acetone in water (5 ml) and deionised 18MΩ water (50 ml). The flux and rejection of a 0.1% aqueous suspension of 0.05 μm polystyrene latex demonstrate the effectiveness of this membrane as a microfiltration membrane.

In Example 48, the microfiltration membrane from Example 47 was washed with water to remove loose latex from the membrane surface and then used to filter successively 70% aqueous nitric acid at 2 bar over 15 hours, pure water for 2 minutes and then 40% aqueous H$_2$SO$_4$ for 2 hours. The resulting membrane was

12

found to have a flux of 200 l/m$^2$·h at 2 bar and a 95% rejection of a 0.1% aqueous suspension of 0.05 $\mu$m polystyrene latex.

The results obtained in Examples 46-65 are shown in Table 6.

TABLE 6

| Example No. | Membrane prepared in Example No | Test Solution | Test Flux litre/m$^2$·hour·bar | Rejection |
|---|---|---|---|---|
| 46 | 5 | BSA | 65 | 2.0% |
| 47 | 5 | 0.05µm latex | 150 | 99.95% |
| 48 | 5 then HNO$_3$&H$_2$SO$_4$ | 0.05µm latex | 100 | 95.0% |
| 49 | 4 | BSA | 20 | 99.0% |
| 50 | 42 | Cytochrome C | 1.5 | 10.7% |
| 51 | 42 | BSA | 0.7 | 33.3% |
| 52 | 42 | γ globulin | 0.2 | 99.9% |
| 53 | 26 | Vitamin B12 | 6.7 | 0.0% |
| 54 | 26 | Cytochrome C | 5.7 | 14.7% |
| 55 | 26 | BSA | 5.3 | 98.0% |
| 56 | 26 | γ globulin | 0.8 | 99.9% |
| 57 | 27 | Vitamin B12 | 15.9 | 0.0% |
| 58 | 27 | Cytochrome C | 11.9 | 0.0% |
| 59 | 27 | BSA | 8.2 | 94.7% |
| 60 | 27 | γ globulin | 5.5 | 99.9% |
| 61 | 17 | Vitamin B12 | 0.4 | 47.1% |
| 62 | 17 | Cytochrome C | 0.2 | 99.7% |
| 63 | 17 | BSA | 0.05 | 99.9% |
| 64 | 17 | γ globulin | 0.05 | 99.9% |
| 65 | 40 | Cytochrome C | 11.4 | 30.9% |
| 66 | 40 | BSA | 10.2 | 97.8% |

Example 67-68

These Examples illustrate the crystallinity of membranes according to the present invention.

The extent of crystallinity of a PEEK membrane was determined by the following method. Wide-angle X-ray diffraction was carried out on a Philips PW1050 vertical goniometer fitted with a PW1130 X-ray generator at 50 kilovolts (kV) and 40 milli-amps (mA) long sine focussed copper X-ray tube, and operated in reflection mode, using a proportional counter detector with a graphite monochromator.

The sample was mounted on a single silicon crystal cut so as to give no silicon reflections.

The sample was scanned from 5° to 45° in two theta, taking 20 points per degree and counting for 5 seconds per point. The data was processed on a DEC PDP1123+ computer.

The level of crystallinity in the membrane sample was estimated according to the method of Blundell and Osborn, Polymer 24, 953, 1983. Figure 5 illustrates a typical wide-angle X-ray diffraction curve for a membrane prepared and crystallised as described in Example 6. Estimates of crystallinity were obtained by drawing a straight baseline between $2\theta = 10°$ and $35°$, and then fitting a scaled amorphous curve under the diffraction peaks in the manner indicated by the broken line in Figure 5. The ratio of the areas of the crystalline peaks to the total area was taken as a weight fraction for the crystallinity

The crystallinity of a sample of PEK membrane prepared and heated in DMA at reflux as described in Example 4 was measured as above.

The results are shown in Table 7.

TABLE 7

| Example No | Membrane prepared in Example No. | % crystallinity w/w |
|---|---|---|
| 67 | 6 | 20 |
| 68 | 4 | 31 |
| CT | CT24 | 0 |
| CT | CT25 | 0 |
| CT: Comparative Test using Berghof membrane. | | |

Example 69

This Example illustrates certain fluxes which are obtainable from asymmetric membranes according to the present invention.

Pure water and acetone fluxes, were determined using a Sartorius SM 16223 membrane cell.

The results are shown in Table 8 from which it can be seen that (i) there is typically an increase in acetone flux as polymer concentration in the strong acid solution is decreased (compare membranes prepared in Examples 40 and 38) and (ii) that the liquid permeabilities of the membranes are in a commercially useful range for ultrafiltration, eg membranes prepared in Examples 20 and 23 and microfiltration, eg membrane prepared in Example 5.

TABLE 8

| MEMBRANE prepared in Example No | PURE WATER FLUX litres/m$^2$•hour | | ACETONE FLUX litres/m$^2$•hour | |
|---|---|---|---|---|
| | 2 bar | 6 bar | 2 bar | 6 bar |
| 5 | 3000.0 | - | - | - |
| 4 | | 140 at 5 bar | - | - |
| 11 | | | - | 14.3 |
| 42 | 13.8 | 18.0 | 82.5 | - |
| 12 | | 0.3 | - | 10.1 |
| 13 | | 0.25 | | 2.0 |
| 14 | 12.7 | 20.5 | | 50.3 |
| 15 | | 0.7 | | 4.0 |
| 16 | | 0.7 | | 4.2 |
| 26 | 51.0 | 143.3 | | 191.1 |
| 28 | - | | | 1.0 |
| 20 | 114.7 | | | - |
| 27 | 43.4 | | | 103.5 |
| 17 | 2.65 | | | - |
| 18 | 10.0 | | | - |
| 19 | 76.4 | | | - |
| 22 | 143.3 | | | - |
| 23 | 233.6 | | | - |
| 20 | | 1.6 | | - |
| 21 | | 0.5 | | - |
| 29 | | 3.7 | | - |
| 30 | 16.0 | | | |
| 40 | 54.6 | | 66.9 | 110 |
| 38 | - | | 34.4 | - |
| 36 | 117 | | - | - |

**Claims**

1. An asymmetric membrane comprising an at least partially crystalline aromatic ether ketone polymer other than a PEEK polymer.

2. An asymmetric membrane as claimed in claim 1 wherein the polymer comprises PEK, PEKK, PEKEKK, PEEKK, PEEKEK, PEDK, PEDEK, PEDEKmK, PEKEN, PEKEKNK, or COPOL 1 or COPOL 2 or a copolymer thereof.

3. An asymmetric membrane as claimed in claim 1 wherein the polymer comprises a homo- or co-polymer of any one of, PEK, PEKK or PEEKK.

4. A composite membrane wherein at least one layer thereof is provided by an asymmetric membrane as claimed in any one of claims 1 to 3.

5. An asymmetric membrane comprising an aromatic ether ketone polymer wherein the level of crystallinity is at least 20%.

6. An asymmetric membrane according to claim 5 comprising an aromatic ether ketone polymer wherein the level of crystallinity is at least 30%.

7. An asymmetric membrane as claimed in claim 5 or 6 wherein the polymer comprises PEEK, PEK, PEKK, PEEKEK, PEKEKK, PEEKK, PEDK, PEDEK, PEDEKmK, PEKEN, PEKEKNK, COPOL 1 or COPOL 2 or a copolymer thereof.

15

8. An asymmetric membrane as claimed in claim 5 or 6 wherein the polymer comprises a homo- or co-polymer of any PEEK, PEK, PEKK or PEEKK.

9. A composite membrane wherein at least one layer is an asymmetric membrane as claimed in any one of claims 5 to 8.

10. A method for the preparation of a membrane as claimed in claim 1 which method comprises at least the steps of
(A) shaping into a desired shape a solution of an aromatic ether ketone polymer other than a PEEK polymer in a strong acid which is non-sulphonating to the polymer;
(B) contacting the shaped solution with a non-solvent for the polymer to precipitate an asymmetric membrane; and
(C) removing the membrane from the strong acid/non-solvent mixture.

11. A method as claimed in claim 10 wherein the strong acid comprises sulphuric acid.

12. A method as claimed in any one of claims 10 and 11 comprising the further step of treating the membrane to enhance its crystallinity.

13. A method for the preparation of a membrane as claimed in claim 5 which method comprises at least the steps of
(A) shaping a solution of an aromatic ether ketone polymer in a strong acid into the desired shape, said acid being non-sulphonating to the polymer;
(B) contacting the shaped solution with a non-solvent for the polymer under suitable conditions such that a membrane in a suitable form, shape, size and porosity is precipitated;
(C) removing the membrane from the strong acid/non-solvent mixture; and
(D) treating the membrane to enhance its crystallinity.

14. A method as claimed in any one of claims 10 to 13 wherein the strong acid is substantially water-free.

15. A method as claimed in any one of claims 10 to 14 wherein the concentration of the polymer in the strong acid is between 5 and 50% w/w.

16. A method as claimed in any one of claims 10 to 15 comprising the further step of treating the membrane with an aqueous medium.

17. A method as claimed in any one of claims 10 to 16 wherein a pore-former is present in the solution of the polymer in the strong acid.

18. A method as claimed in claim 17 wherein the pore-former is an organic material.

19. A method as claimed in any one of claims 10 to 16 wherein a pore-forming agent is present with the non-solvent in a gelation bath.

20. A method as claimed in claim 12 or 13 wherein the step to enhance crystallinity comprises treatment of the membrane with a polar aprotic solvent.

21. A method as claimed in claim 12 or 13 wherein the step to enhance crystallinity comprises heat treatment of the membrane after drying.

22. A micro-filtration or ultrafiltration process using a membrane as claimed in any one of claims 1 to 9.

23. A process for gas separation, pervaporation, or reverse osmosis using a membrane as claimed in any one of claims 1 to 9.

## EP 0 382 356 B1

**Patentansprüche**

1. Asymmetrische Membran, bestehend aus einem mindestens teilweise kristallinischen, aromatischen Etherketonpolymer, bei welchem es sich nicht um ein PEEK-Polymer handelt.

2. Asymmetrische Membran nach Anspruch 1, bei der das Polymer aus PEK, PEKK, PEKEKK, PEEKK, PEEKEK, PEDK, PEDEK, PEDEKmK, PEKEN, PEKEKNK oder COPOL 1 oder COPOL 2 oder einem Copolymerisat derselben besteht.

3. Asymmetrische Membran nach Anspruch 1, bei der das Polymer aus einem Homo- oder Copolymerisat von PEK, PEKK oder PEEKK besteht.

4. Mehrschichtmembran, bei der mindestens eine der Schichten aus einer asymmetrischen Membran nach einem der Ansprüche 1 bis 3 besteht.

5. Asymmetrische Membran, bestehend aus einem aromatischen Etherketonpolymer, bei welchem der Kristallinitätsgrad mindestens 20% beträgt.

6. Asymmetrische Membran nach Anspruch 5, bestehend auf einem aromatischen Etherketonpolymer, bei welchem der Kristallinitätsgrad mindestens 30% beträgt.

7. Asymmetrische Membran nach Anspruch 5 oder 6, bei der das Polymer aus PEEK, PEK, PEKK, PEEKEK, PEKEKK, PEEKK, PEDK, PEDEK, PEDEKmK, PEKEN, PEKEKNK, COPOL 1 oder COPOL 2 oder einem Copolymerisat derselben besteht.

8. Asymmetrische Membran nach Anspruch 5 oder 6, bei der das Polymer aus einem Homo- oder Copolymerisat von PEEK, PEK, PEKK oder PEEKK besteht.

9. Mehrschichtmembran, bei der mindestens eine Schicht eine asymmetrische Membran nach einem der Ansprüche 5 bis 8 darstellt.

10. Methode zur Herstellung einer Membran nach Anspruch 1, welche mindestens folgende Stufen umfaßt:
    (A) Verformung einer Lösung eines kein PEEK-Polymer darstellenden aromatischen Etherketonpolymers in einer starken Säure, welche keine Sulfonierwirkung auf das Polymer ausübt, in die gewünschte Form;
    (B) In-Kontakt-Bringen der verformten Lösung mit einer Substanz ohne Lösungsmittelwirkung auf das Polymer zum Abscheiden einer asymmetrischen Membran; und
    (C) Entfernung der Membran aus der Mischung starker Säure/Substanz ohne Lösungsmittelwirkung.

11. Methode nach Anspruch 10, bei der die starke Säure aus Schwefelsäure besteht.

12. Methode nach einem der Ansprüche 10 und 11, welche die weitere Stufe der Behandlung der Membran zur Erhöhung ihrer Kristallinität umfaßt.

13. Methode zur Herstellung einer Membran nach Anspruch 5, welche mindestens folgende Stufen umfaßt:
    (A) Verformung der Lösung eines aromatischen Etherketonpolymers in einer starken Säure in die gewünschte Form, wobei die Säure keine Sulfonierwirkung auf das Polymer ausübt;
    (B) In-Kontakt-Bringen der verformten Lösung mit einer Substanz ohne Lösungsmittelwirkung auf das Polymer unter geeigneten Bedingungen, derart, daß eine Membran in geeigneter Form, Gestalt, Größe und Porosität abgeschieden wird;
    (C) Entfernung der Membran aus der Mischung starker Säure/Substanz ohne Lösungsmittelwirkung; und
    (D) Behandlung der Membran zur Erhöhung ihrer Kristallinität.

14. Methode nach einem der Ansprüche 10 bis 13, bei der die starke Säure im wesentlichen wasserfrei ist.

15. Methode nach einem der Ansprüche 10 bis 14, bei der die Konzentration des Polymers in der starken Säure zwischen 5 und 50 Gew.-% liegt.

**16.** Methode nach einem der Ansprüche 10 bis 15, welche die weitere Stufe der Behandlung der Membran mit einem wässrigen Medium umfaßt.

**17.** Methode nach einem der Ansprüche 10 bis 16, bei der ein Porenbildner in der Lösung des Polymers in der starken Säure anwesend ist.

**18.** Methode nach Anspruch 17, bei der der Porenbildner ein organisches Material ist.

**19.** Methode nach einem der Ansprüche 10 bis 16, bei der ein porenbildendes Mittel mit der Substanz ohne Lösungsmittelwirkung in einem Gelbildungsbad anwesend ist.

**20.** Methode nach Anspruch 12 oder 13, bei der die Stufe zur Erhöhung der Kristallinität die Behandlung der Membran mit einem polaren, aprotischen Lösungsmittel umfaßt.

**21.** Methode nach Anspruch 12 oder 13, bei der die Stufe zur Erhöhung der Kristallinität eine Wärmebehandlung der Membran nach dem Trocknen umfaßt.

**22.** Mikrofiltrations- oder Ultrafiltrationsverfahren unter Verwendung einer Membran nach einem der Ansprüche 1 bis 9.

**23.** Verfahren zur Gasabscheidung, Pervaporation oder Umkehrosmose unter Verwendung einer Membran nach einem der Ansprüche 1 bis 9.

**Revendications**

**1.** Membrane asymétrique comprenant un polymère aromatique d'éther-cétone au moins partiellement cristallin, autre qu'un polymère PEEK.

**2.** Membrane asymétrique selon la revendication 1, dans laquelle le polymère comprend PEK, PEKK, PEKEKK, PEEKK, PEEKEK, PEDK, PEDEK, PEDEKmK, PEKEN, PEKEKNK ou bien COPOL 1 ou COPOL 2 ou encore un copolymère de ces derniers.

**3.** Membrane asymétrique selon la revendication 1, dans laquelle le polymère comprend un homopolymère ou un copolymère, de l'un quelconque des polymères parmi PEK, PEKK, ou encore PEEKK.

**4.** Membrane composite dans laquelle au moins une de ses couches est munie d'une membrane asymétrique selon l'une quelconque des revendications 1 à 3.

**5.** Membrane asymétrique comprenant un polymère aromatique d'éther-cétone dans lequel le taux de cristallinité est d'au moins 20%.

**6.** Membrane asymétrique selon la revendication 5, comprenant un polymère aromatique d'éther-cétone dans lequel le taux de cristallinité est d'au moins 30%.

**7.** Membrane asymétrique selon la revendication 5 ou 6, dans laquelle le polymère comprend PEEK, PEK, PEKK, PEEKEK, PEKEKK, PEEKK, PEDK, PEDEK, PEDEKmK, PEKEN, PEKEKNK ou bien COPOL 1 ou COPOL 2 ou encore un copolymère de ces derniers.

**8.** Membrane asymétrique selon la revendication 5 ou 6, dans laquelle le polymère comprend un homopolymère ou un copolymère, de l'un quelconque des polymères parmi PEEK, PEK, PEKK ou encore PEEKK.

**9.** Membrane composite dans laquelle au moins une couche est une membrane asymétrique selon l'une quelconque des revendications 5 a 8.

**10.** Procédé pour la préparation d'une membrane selon la revendication 1, ledit procédé comprenant au moins les étapes consistant à :

(A) façonner en une forme désirée une solution d'un polymère aromatique d'éther-cétone autre qu'un polymère PEEK, dans un acide fort qui est non sulfonant pour le polymère;

(B) mettre la solution façonnée en contact avec un non-solvant pour le polymère dans le but de précipiter une membrane asymétrique; et

(C) retirer la membrane du mélange acide fort/non solvant.

11. Procédé selon la revendication 10, dans lequel l'acide fort comprend l'acide sulfurique.

12. Procédé selon l'une quelconque des revendications 10 et 11, comprenant l'étape supplémentaire consistant à traiter la membrane pour augmenter sa cristallinité.

13. Procédé pour la préparation d'une membrane selon la revendication 5, ledit procédé comprenant au moins les étapes consistant à :

(A) façonner une solution d'un polymère aromatique d'éther-cétone dans un acide fort pour obtenir la forme désirée, ledit acide étant non sulfonant pour le polymère;

(B) mettre la solution façonnée en contact avec un non-solvant pour le polymère dans des conditions appropriées de telle sorte que l'on précipite une membrane ayant une configuration, une forme, une dimension et une porosité appropriées;

(C) retirer la membrane du mélange acide fort/non-solvant; et

(D) traiter la membrane pour augmenter sa cristallinité.

14. Procédé selon l'une quelconque des revendications 10 à 13, dans lequel l'acide fort est sensiblement anhydre.

15. Procédé selon l'une quelconque des revendications 10 à 14, dans lequel la concentration du polymère dans l'acide fort se situe entre 5 et 50% en poids/poids.

16. Procédé selon l'une quelconque des revendications 10 à 15, comprenant l'étape supplémentaire consistant à traiter la membrane avec un milieu aqueux.

17. Procédé selon l'une quelconque des revendications 10 à 16, dans lequel un formateur de pores est présent dans la solution du polymère dans l'acide fort.

18. Procédé selon la revendication 17, dans lequel le formateur de pores est une matière organique.

19. Procédé selon l'une quelconque des revendications 10 à 16, dans lequel un agent formateur de pores est présent avec le non-solvant dans un bain de gélification.

20. Procédé selon la revendication 12 ou 13, dans lequel l'étape pour augmenter la cristallinité comprend le traitement de la membrane avec un solvant aprotique polaire.

21. Procédé selon la revendication 12 ou 13, dans lequel l'étape pour augmenter la cristallinité comprend le traitement thermique de la membrane après séchage.

22. Procédé de microfiltration ou d'ultrafiltration utilisant une membrane selon l'une quelconque des revendications 1 à 9.

23. Procédé pour la séparation des gaz, pour l'évaporation à travers une membrane ou pour l'osmose inverse en utilisant une membrane selon l'une quelconque des revendications 1 à 9.

PEEK             I

PEK             II

PEKK             III

PEKEKK             IV

PEEKK             V

PEEKEK             VI

## Figure 1

# Fig.2.

PEDK VII

PEDEK VIII

PEDEKmK IX

PEKEN X

**PEKEKNK** **Xa**

PES

XI

PEES

XII

SPEES

XIII

# Figure 3

COPOL 1, (XIV)

COPOL 2, (XV)

COPOL 3, (XVI)

Figure 4

Figure 5

EP 0 382 356 B1

Figure 6